# EUROPEAN PATENT APPLICATION

(11) **EP 1 811 759 A1**
(43) Date of publication of application: **25.07.2007**
(21) Application number: 06300056.6
(22) Date of filing: 23.01.2006
(51) Int. Cl.: H04M 3/56, H04M 3/42

(54) **Conference call recording system with user defined tagging**

(71) Applicant: Hewlett-Packard Development Company, L.P., Houston, TX 77070 (US)
(72) Inventor: Hyerle, Robert, 38053 Grenoble Cedex 09 (FR)
(74) Representative: Franks, Adam Peter

(57) **Abstract**

Embodiments of the present invention relate to a communication method comprising the steps of storing speech data representing a conference call; detecting event data associated with an event generated in response to a user action during the conference call in particular a user pushing a button on the telephone generating a DTMF tone to indicate that this point in time is of particular interest to him. Storing correlation data correlating the event data and a respective place within or a respective portion of the stored speech data, in particular storing the information as an VoiceXML or VXML file.

## Description

### Field of the invention

The present invention relates to a communication system and method.

### Background to the invention

Within today's communication-enabled environment or connected environment, many businesses are able to conduct business involving interactions between multiple parties even though those parties are geographically distributed. For example, it is common for international businesses to hold conference calls to discuss business issues that have global implications.

It is often the case that a number of very salient points or issues arise from such conference calls and it is, therefore, commonplace for a participant to such a conference call to make manual notes of items or actions of interest to be addressed after the conference call. Alternatively, it is known within the art to record a conference call and to review it with a view to extracting any such salient points or action issues. However, the former technique clearly distracts a participant making notes from the conference call while they are making notes. The latter technique is clearly time-consuming in that the participant needs to review the media stream representing the conference call in a stop-start manner using the play and pause functions of a media playback device.

It is an object of embodiments of the present invention to at least mitigate one or more of the problems of the prior art.

### Summary of invention

Accordingly, a first aspect of embodiments of the present invention provides a communication method comprising the steps of storing speech data representing a conference call; detecting event data associated with an event generated in response to a user action during the conference call and storing correlation data correlating the event data and a respective place within or a respective portion of the stored speech data.

Advantageously, a conference call can be annotated by at least one participant to the conference call to create or to identify points of interest within the conference call or issues to be addressed following the conference call.

Embodiments provide a communication system comprising means to store speech data representing a conference call; means to detect event data associated with an event generated in response to a user action during the conference call and storage to store correlation data correlating the event data and a respective place within or a respective portion of the stored speech data.

Embodiments of the present invention can be realised using hardware, software or a combination thereof. The software can be stored using optically or magnetically readable media such as optical or magnetic discs or stored using devices such as memory devices, chips, ROM etc. Accordingly, embodiments provide a computer program comprising code for implementing a method or system as described or claimed herein. Furthermore, embodiments provide computer readable storage storing such a computer program.

Other aspects of embodiments of the present invention are described below and claimed in the claims.

### Brief description of the drawings

Embodiments of the present invention will now be described, by way of example only, with reference to the accompanying drawings in which:
Figure 1 shows a communication system according to a first embodiment;
Figure 2 shows the communication system of figure 1 in greater detail and, more particularly, shows a processing platform according to an embodiment.

### Detailed description of embodiments of the present invention

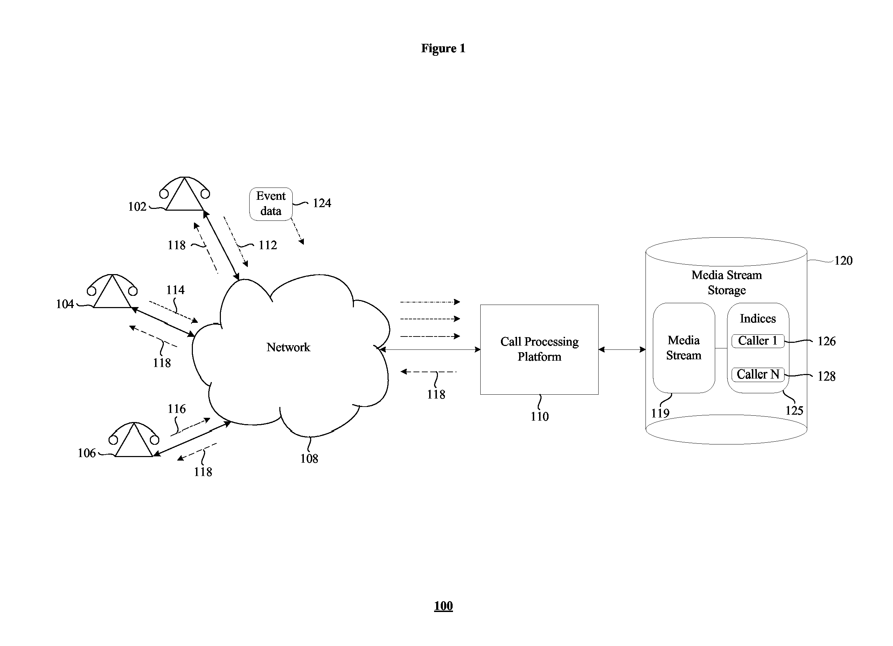

Referring to figure 1, there is shown a communication arrangement 100 for supporting a conference call between a number of callers using respective communication devices 102 to 106. The communication devices are connected, either directly or via a communication network 108, to a communication system 110 for hosting the conference call. The communication system 110 can, in a preferred embodiment, be realised using the Open Call Media Platform (OCMP) available from Hewlett Packard Co.

Media streams 112 to 116 representing the voice data associated with the callers are forwarded to the communication system 110 where they are mixed to produce a mixed media stream 118 that is subsequently distributed to all of the callers so that each caller can hear all of the other callers. The mixed media stream 118 is also stored as a stored media stream 119 using non-volatile or persistent storage 120, that is, it is streamed to the non-volatile storage. Embodiments can be realised using a Hard-Disc Drive (HDD) as the non-volatile or persistent storage. However, other forms of non-volatile or persistent storage can equally well be used. It will be appreciated that the media streams 112 to 116, 118 and 119 represent embodiments of or at least comprise speech data.

The communication devices 102 to 106 can be, for example, telephones capable of generating in-band signalling such as, for example, DTMF tones that can be detected and acted upon by the communication system 110 or some other entity. When a caller hears or has heard a point or passage of interest during the conference call, they provide an indication to that effect by generating an event using their communication device. Data 124 representing, or associated with, the event is output to the communication system 110. For example, depressing one of the telephone keys generates a corresponding DTMF tone. The generation of the DTMF tone represents an embodiment of an event. In the illustrated example, the first communication device 102 is shown as having output event data 124. It will be appreciated that data representing the DTMF tone is an embodiment of event data. In the case of a DTMF tone, the data 124 representing, or associated with, the event might be conveyed as part of a voice stream 112 to 116. Alternatively, or additionally, the communication system 110 or some other entity can detect the event and produce corresponding data representing, or associated with, the detected event.

Upon receiving or detecting such an event, the communication system 110 creates an association between data representing or associated with the event that was generated in response to a user action or caller action and the media stream representing the conference call. Therefore, the communication system 110 stores an index of events 125 defining or for accessing corresponding portions of the stored media stream 119 or defining entry points into the stored media stream 119. In the illustrated embodiment, two user indices 126 and 128 are illustrated. The indices 126 and 128 are associated with respective portions of the stored media stream 119. The indices are also arranged, optionally, to comprise an indication of the call participants that generated respective events.

In preferred embodiments, a pair of user events is used to define a portion of the media stream that can be encapsulated and treated as a discrete element. Preferably, VoiceXML elements such as, for example, the <p> element and its corresponding closing element, </p>, are used to define a paragraph of speech or a paragraph of the media stream within a VoiceXML file of interest to a caller. It will be appreciated that the VoiceXML elements are embodiments of indicia or a pair of indicium or correlation data that can be used as indices into, or within, the media stream. It will be appreciated by those skilled in the art that any such indicia can be used to directly access portions of the media stream of interest to a call participant and, hence, aspects of the conference call that were of interest to the caller who generated the DTMF tone. The <p> element can be inserted upon detecting an event and the corresponding closing element, </p>, can be inserted at some later stage. For example, the closing element, </p>, can be inserted upon detecting a subsequent event or after a predetermined period of time has elapsed since the event. It will be appreciated that the above will define a portion of data representing speech of the conference call between the <p> and the </p>. One skilled in the art will appreciate that a VoiceXML file is merely one convenient way to represent or store the speech data of the conference call. The speech data can be stored in any other convenient way.

Rather than an indicium representing the start of a portion of the conference call of interest, it can be interpreted as or act as a mere reference point such that the <p> element and the closing element, </p>, for example, might be inserted without any intermediary data representing speech of the conference call.

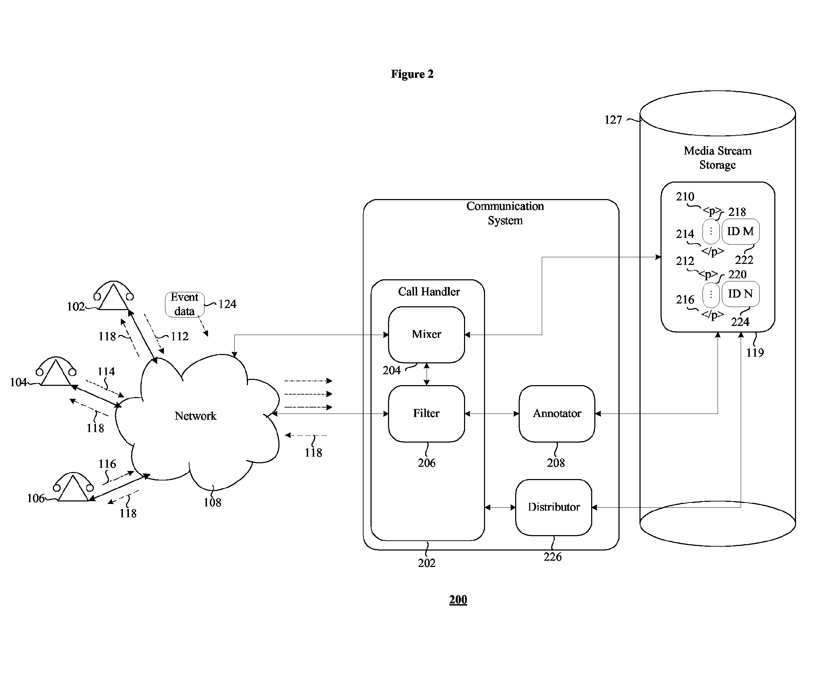

Referring to figure 2, there is shown an embodiment 200 of a call processing platform described above with reference to figure 1, only in greater detail. The call processing platform 200 comprises call handler 202 for receiving the streams 112 to 116 from the communication devices 102 to 106, as well as for combining them and outputting the combined media stream to the communication devices 102 to 106 using a mixer 204. The call handler comprises a mixer 204 for combining the incoming streams 112 to 116 to form the combined media stream 118. Embodiments of the call handler 202 can be realised using software, hardware or a combination of hardware and software.

The call handler 202 comprises a filter 206 realised using hardware, software or a combination thereof. The filter 206 is arranged to filter the incoming streams 112 to 116 to extract, and, preferably, remove, any event data 124 from the incoming streams 112 to 116 prior to the filtered incoming streams (not shown) being passed to the mixer 204 for combining to produce the combined media stream 118.

The filter 206 invokes an annotator 208 that is responsible for associating data, related to detection of a user event or, more particularly, data representing or associated with a user event, with the stored combined media stream 119. As indicated above, preferred embodiments realise any such associated data in the form of the <p> element of VoiceXML. It can be appreciated that the embodiment shown in figure 2 has been illustrated using two pairs of <p> elements 210, 212 and corresponding closing elements, </p>, 214, 216 that define respective portions of the stored combined media stream 119 of interest. Data 218, 220 contained within or between the <p> element and their respective closing elements, </p>, represents the combined media stream 118 or at least portions thereof.

In preferred embodiments, data identifying the user or caller that generated event data 124 is also stored or associated with the stored combined media stream 119. In the illustrated embodiment, two instances of identification data 222 and 224 are shown. The identification data can be associated with one or more of the callers or, more particularly, events generated using the communication devices 102 to 106. It will be appreciated that two instances of such identification data have been shown for illustrative purposes only and that in practice many instances of such data identifying the users or callers that generated respective event data 124 will be stored. Suitably, one or more than one portion of the conference call of interest to a caller can be identified using the data 222 and 224 and distributed to that caller or to respective callers. Embodiments can be realised in which the whole of the stored media stream 119 is distributed to one or more callers that generated events. However, the bandwidth required to achieve any such distribution would be high. Therefore, preferred embodiments are realised in which a distributor 226 processes the stored media stream 119 and the identification data 222 and 224 to extract and forward only those portions of the stored media stream 119 indicated as being of interest to respective callers. In preferred embodiments, the data 222 and 224 is stored within attributes of the <p> elements 212 to 216. For example, an embodiment may define an attribute "caller" that can be used to identify a caller that has expressed an interest in a respective portion of the media stream defined by the element containing the attribute. An example of the above would be <p caller=Robert> audio data </p>, which would define a caller, "Robert" as having expressed an interest in speech defined by "*audio data*".

Alternatively, a communication device 102 to 106 or any other entity can be equipped with software to perform a substantially similar function to the distributor 226, in terms of extracting from the stored media stream 119 those portions of interest to a user or caller.

The embodiments have been described with reference to the filter 206 being a part of the call handler. However, embodiments are not limited to such an arrangement. Embodiments can be realised in which the filter forms part of some other entity either within or separate from the communication system.

Although the above embodiments have been described with reference to generating DTMF tones and the DTMF tones representing embodiments of detectable events, embodiments of the present invention are not limited to such an arrangement. Embodiments can be realised in which a caller's interest in a particular or current portion of the conference call is expressed in some other manner such as, for example, via a predetermined utterance, via out of band signalling using a data channel or in any other manner.

The above embodiments have been described with reference to a single caller generating user events and, thereby, expressing an interest in respective portions of the conference call. However, embodiments can be realised in which more than one user or caller generates events expressing interests in respective portions of the conference call. In such an embodiment, identification data associated with the user generating the event is also, preferably, included in or associated with the media stream. In a preferred embodiment, each caller that expressed an interest in at least one portion of the conference call receives a copy of a VoiceXML file, or any other file or message, comprising at least that portion of the conference call in relation to which an interest was expressed. Optionally, the file will comprise an index to such a portion. It will be appreciated that embodiments can be realised in which each participant or an arbitrarily selectable number of participants receive, for example, a VoiceXML file containing the media stream representing the conference call, or at least selected portions thereof, as well as containing the or at least some indicia of at least one other caller to the conference call.

It will be appreciated that embodiments of the invention have been described with reference to the <p> element being used to define portions of the media stream of interest to a caller. However, embodiments are not limited to such an arrangement. Embodiments can be realised in which other elements are used. For example, the <audio> element, together with its closing element, </audio>, can be used to define or access a portion of the conference call of interest to a caller.

## Claims

1. A communication method comprising the steps of storing speech data representing a conference call; detecting event data associated with an event generated in response to a user action during the conference call and storing correlation data correlating the event data and a respective place within or a respective portion of the stored speech data.

2. A communication method as claimed in claim 1 in which step of storing the correlation data comprises storing at least one of start and end delimiters defining a portion of the stored speech data.

3. A communication method as claimed in claim 2 in which the step of storing at least one of the start and end delimiters comprises storing at least one VoiceXML element or tag.

4. A communication method as claimed in any preceding claim in which the step of storing the correlation data comprises storing identification data associated with at least one of a user that generated the event data or performed the user action or identification data associated with a communication device of such a user.

5. A communication method as claimed in any preceding claim comprising receiving speech data and event data in an incoming media stream and filtering the incoming media stream to separate the speech data and the event data.

6. A communication method as claimed in any preceding claim comprising distributing at least a portion of the stored speech data in response to the correlation data.

7. A communication method as claimed in claim 6 comprising processing the distributed portion of the speech data to extract data representing speech of interest to the user; the extracted data being defined by the correlation data.

8. A communication method as claimed in any preceding claim comprising processing the stored speech data and the correlation data to extract at least one portion of the speech data of interest to a user associated with the event data and distributing the extracted at least one portion to the user.

9. A system comprising means to implement a method as claimed in any preceding claim.

10. A computer program comprising code for implementing a method or system as claimed in any preceding claim.
